# EUROPEAN PATENT SPECIFICATION

(11) **EP 3 128 316 B1**
(45) Date of publication and mention of the grant of the patent: **17.02.2021**
(21) Application number: 16001678.8
(22) Date of filing: 29.07.2016
(51) Int. Cl.: G01N 23/20, G05B 17/02

(54) **OPERATION GUIDE SYSTEM FOR X-RAY ANALYSIS AND OPERATION GUIDE METHOD THEREFOR**
OPERATIONSFÜHRUNGSSYSTEM ZUR RÖNTGENANALYSE UND OPERATIONSFÜHRUNGSVERFAHREN DAFÜR
SYSTÈME DE GUIDAGE DE FONCTIONNEMENT POUR ANALYSE AUX RAYONS X ET PROCÉDÉ DE GUIDE DE FONCTIONNEMENT ASSOCIÉ

(30) Priority: 06.08.2015 JP 2015155827
(43) Date of publication of application: 08.02.2017
(73) Proprietor: Rigaku Corporation, Akishima-shi, Tokyo 196-8666 (JP)
(72) Inventor: Sasaki, Akito, Akishima-shi, Tokyo 196-8666 (JP)
(74) Representative: Müller-Boré & Partner Patentanwälte PartG mbB

(56) References cited:
- EP-A2- 0 959 345
- GB-A- 2 290 689
- US-A1- 2005 105 686
- US-A1- 2013 138 382

## Description

### BACKGROUND OF THE INVENTION

### 1. Field of the Invention

The present invention relates to an operation guide system for an X-ray analysis and an operation guide method therefor, and more particularly, to a guidance function for a user.

### 2. Description of the Related Art

In recent years, with the development of an X-ray analysis apparatus, a wide variety of users use the X-ray analysis apparatus for various analysis purposes. The X-ray analysis apparatus is no longer an apparatus used only by some skilled users, but is increasing in the opportunity of being used by users inexperienced in the X-ray analysis apparatus.

### SUMMARY OF THE INVENTION

When a measurement is conducted through use of an X-ray analysis apparatus, it is desired that a user select parts suitable for a sample to be analyzed, assemble a measurement optical system, and conduct a measurement under a control condition suitable for the sample. However, it is difficult for the user inexperienced in the X-ray analysis apparatus to determine those operations in his/her own judgment.

In JP 3353496 B2, there is disclosed an analysis apparatus including setting means capable of the setting of setting data required for various kinds of analysis processing with a simple operation based on information obtained by collecting a setting procedure for data required for each of a plurality of pieces of analysis processing.

In GB 2 290 689 A, there is discloses a computer system having a data base of analytical procedures for analysing a material sample using radiation such as X-ray radiation in a diffractometer. The computer system requests a user to input to the system information for identifying at least one desired parameter of the material sample. The computer system uses this information to identify the possible analytical procedures for determining that desired parameter. An analytical procedure or procedures selected by the user and/or computer system is then simulated by the computer system to produce a first simulation of radiation leaving the sample. The selected analytical procedure is simulated again after the computer system has varied the influence of the desired parameter to produce a second simulation. The computer system then compares the first and second simulations to determine where the difference between the first and second simulations is greatest so as to enable an experiment to be conducted in the area or areas most sensitive to the desired parameter.

In JP 2013-137297 A and JP 2013-137298 A, there are described X-ray analysis apparatus that have functions of realizing a plurality of measuring methods and enable effective utilization of those measuring functions.

However, even with only a specific analysis purpose (measuring method), the measuring optical system and the control condition differ depending on the respective samples to be analyzed by users, and it is difficult to achieve a database configured to store measuring optical systems and control conditions that are suitable for all the samples to be possibly analyzed by the users.

Even when the X-ray analysis apparatus recommends a user a specific measuring optical system and a specific control condition for the sample to be analyzed, it is difficult for an inexperienced user to determine whether or not the measuring optical system and the control condition are suitable ones.

The present invention has been made in view of the above-mentioned problems, and the present invention has an object to provide an operation guide system for an X-ray analysis according to independent claim 1, an operation guide method therefore according to independent claim 5 and an operation guide program product therefore according to independent claim 6, which enable a user to easily determine a measurement condition for a sample to be analyzed.

### BRIEF DESCRIPTION OF THE DRAWINGS

FIG. 1 is a block diagram for illustrating a configuration of an X-ray analysis apparatus according to an embodiment of the present invention.
FIG. 2 is a block diagram for illustrating an X-ray measuring unit of the X-ray analysis apparatus according to the embodiment of the present invention.
FIG. 3 is a flowchart of a first control program according to the embodiment of the present invention.
FIG. 4 is a diagram for illustrating an analysis purpose selection screen according to the embodiment of the present invention.
FIG. 5 is a diagram for illustrating a sample information input screen according to the embodiment of the present invention.
FIG. 6 is a graph for showing a virtual measurement result screen according to the embodiment of the present invention.
FIG. 7 is a diagram for illustrating a measurement condition screen according to the embodiment of the present invention.
FIG. 8 is a flowchart of a second control program according to the embodiment of the present invention.
FIG. 9 is a diagram for illustrating a sample information input screen according to another example of the embodiment of the present invention.
FIG. 10 is a diagram for illustrating a measurement condition screen according to another example of the embodiment of the present invention.

### DETAILED DESCRIPTION OF THE INVENTION

Now, an embodiment of the present invention is described referring to the drawings. For clearer illustration, some sizes, shapes, and the like are schematically illustrated in the drawings in comparison to actual ones. However, the sizes, the shapes, and the like are merely an example, and do not limit understanding of the present invention. Further, herein and in each of the drawings, like elements as those described relating to the drawings already referred to are denoted by like reference symbols, and detailed description thereof is sometimes omitted as appropriate.

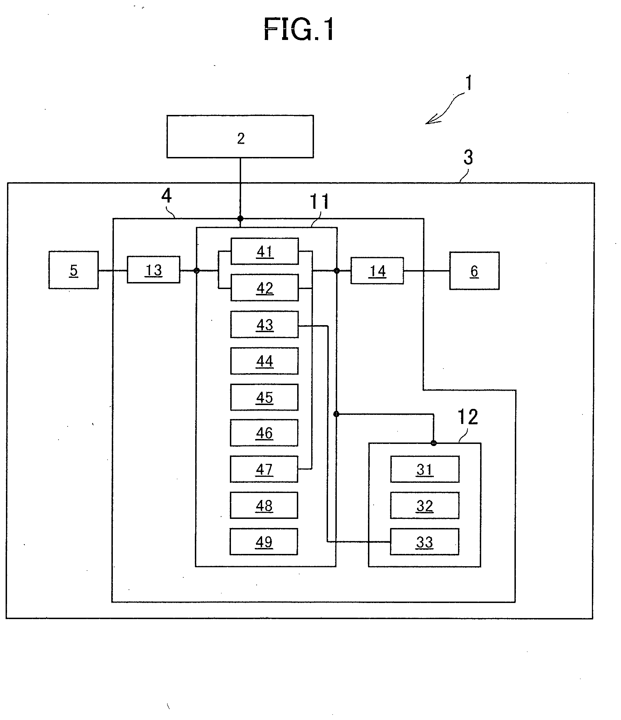

FIG. 1 is a block diagram for illustrating a configuration of an X-ray analysis apparatus 1 according to an embodiment of the present invention. The X-ray analysis apparatus 1 according to this embodiment includes an X-ray measuring unit 2 and an operation guide system 3, and the operation guide system 3 includes a control unit 4, an input device 5, and a display device 6. The control unit 4 includes a CPU section 11 (microprocessor), a storage section 12, an information input portion 13, and an information output portion 14. The control unit 4 is achieved by a computer used in general, and further includes a read only memory (ROM) (not shown) and a random access memory (RAM) (not shown) . The ROM and the RAM form internal memories of the computer. The storage section 12 is a recording medium, and may be formed of a semiconductor memory, a hard disk drive, or other such arbitrary recording medium. In this case, the storage section 12 is installed inside the computer, but may be installed outside the computer. The storage section 12 may be a single recording medium, or may be formed of a plurality of recording mediums. The information input portion 13 is, for example, an interface connected to the input device 5, and is configured to acquire, from the input device 5, information input to the input device 5 by a user. The information output portion 14 is, for example, an interface connected to the display device 6, and is configured to output, to the display device 6, information to be displayed on the display device 6. The input device 5 is achieved by a keyboard and a mouse, a touch panel, or the like, and the display device 6 is achieved by a display or the like used in general. The control unit 4 of the X-ray analysis apparatus 1 includes respective means (respective portions) for executing respective steps of an operation guide method for an X-ray analysis described below. Further, an operation guide program for the X-ray analysis according to this embodiment is a program for causing the computer to function as the respective means (respective portions) . The CPU section 11 and the storage section 12 of the control unit 4 are described below in detail.

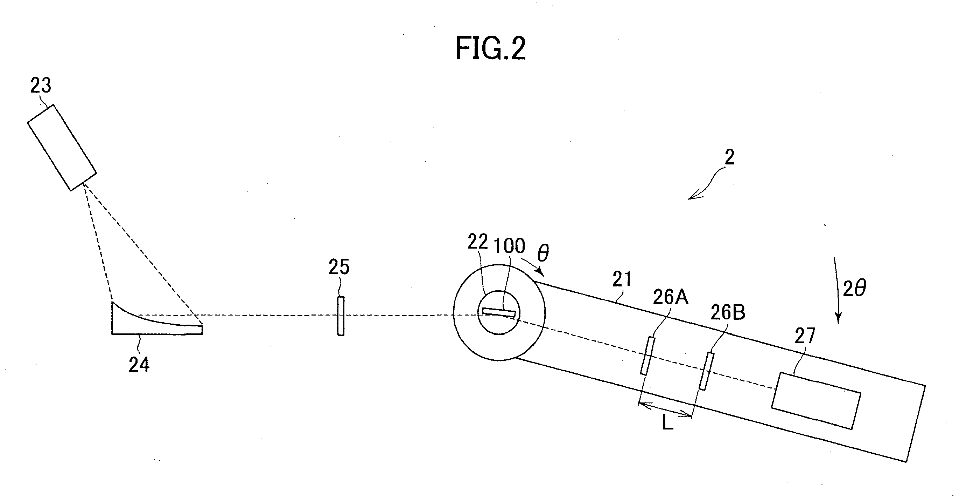

FIG. 2 is a block diagram for illustrating an example of the X-ray measuring unit 2 of the X-ray analysis apparatus 1 according to this embodiment. The X-ray measuring unit 2 illustrated in FIG. 2 is a slit collimation optical system used for an X-ray reflectivity (XRR) measurement, and is configured to apply an incident X-ray to a sample 100, and to detect a reflected X-ray emitted from the sample 100. In this case, the sample 100 is a sample obtained by stacking at least one thin film on a substrate, and specifically has such a film structure that two thin films are formed on the substrate. As illustrated in FIG. 2, the X-ray measuring unit 2 includes a goniometer 21, a support base 22 configured to support the sample 100, an X-ray generating portion 23, a multilayer mirror 24, an incident slit 25, two light-receiving slits (first light-receiving slit 26A and second light-receiving slit 26B), and a detector 27.

The goniometer 21 is a θ-2θ rotation system, and the support base 22 is mounted on the goniometer 21 so that the sample 100 is located at a rotation center. The two light-receiving slits and the detector 27 are mounted on the goniometer 21 so as to be rotated by 2θ as the support base 22 is rotated by θ.

The X-ray generating portion 23 includes an X-ray tube, and is configured to emit X-rays to be diverged to the multilayer mirror 24. The multilayer mirror 24 includes a reflection surface having a cross section being a parabola (quadratic function). The multilayer mirror 24 is arranged such that the focus of the parabola is included in the microfocus of the X-rays emitted by the X-ray generating portion 23. Of the X-rays reflected by the multilayer mirror 24, X-rays having a predetermined wavelength are selectively reflected toward a predetermined direction due to the multilayer film structure of the multilayer mirror 24, and are collimated because the cross section of the reflection surface is a parabola, to thereby enter the incident slit 25.

The X-ray that has passed through the incident slit 25 enters the sample 100 placed on the support base 22 by an incident angle θ as an incident X-ray. In this case, the incident angle θ represents an angle formed between the optical axis of the incident X-ray and the surface of the sample 100 (surface of a film structure), and is different from the case of geometrical optics that defines the incident angle as an angle formed between an incident light beam and the normal to a reflection surface. The incident X-ray is applied to the sample 100, and the reflected X-ray is emitted from the sample 100 with a reflection angle θ (angle formed between the optical axis of the reflected X-ray and the surface of the sample 100) . An angle between the reflected X-ray and the incident X-ray is 2θ.

The reflected X-ray passes through the two light-receiving slits (first light-receiving slit 26A and second light-receiving slit 26B), and the detector 27 detects the X-rays entering the detector 27. The resolution of a measuring optical system is defined by not only characteristics of the X-ray generating portion 23 and the multilayer mirror 24 but also a slit width of the incident slit 25, a slit width of each of the two light-receiving slits, and a spacing L between the two light-receiving slits. The X-ray measuring unit 2 illustrated in FIG. 2 is a slit collimation optical system, and is referred to as "mid-resolution optical system". In order to enable a measurement with a higher resolution, not only the incident slit 25 but also a channel monochromator (one channel-cut crystal (a pair of channel-cut crystals)) may be arranged, which is referred to as "high resolution optical system" . In order to enable a measurement with a much higher resolution, a four-crystal monochromator (two channel-cut crystals (two pairs of channel-cut crystals)) may be arranged, which is referred to as "ultra-high resolution optical system". Further, an analyzer crystal may be arranged between the two light-receiving slits.

The detector 27 may be any one of a zero-dimensional detector (for example, counter tube), a one-dimensional detector (for example, linear CCD sensor), and a two-dimensional detector (for example, CCD sensor) . In this case, the detector 27 is a counter tube.

### [Operation Guide]

Next, a description is made of the operation guide method for the X-ray analysis apparatus 1 (or operation guide system 3) according to this embodiment. As illustrated in FIG. 1, the storage section 12 stores a first control program 31 and a second control program 32, and includes a system information storage portion 33.

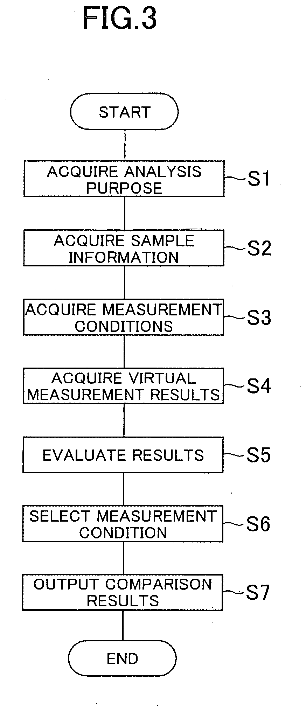

FIG. 3 is a flowchart of the first control program 31 according to this embodiment. The first control program 31 is a program to be executed before a measurement, and is a program for recommending the user a measurement condition suitable for a selected analysis purpose and a sample to be analyzed. The X-ray analysis apparatus 1 according to this embodiment is capable of conducting an analysis corresponding to a plurality of analysis purposes (M analysis purposes, where M is a natural number). As illustrated in FIG. 1, the CPU section 11 of the control unit 4 includes an analysis purpose acquisition portion 41, a sample information acquisition portion 42, a measurement condition acquisition portion 43, a virtual result acquisition portion 44, a result evaluation portion 45, a measurement condition selection portion 46, and a comparison result output portion 47.

### [S1: Analysis Purpose Acquisition Step]

When the first control program 31 is started, the information output portion 14 of the control unit 4 causes the display device 6 to display an analysis purpose selection screen. The information input portion 13 of the control unit 4 acquires information input by the input device 5 including a mouse. In this case, the analysis purpose acquisition portion 41 acquires the analysis purpose selected by the user as a predetermined analysis purpose (S1: analysis purpose acquisition step).

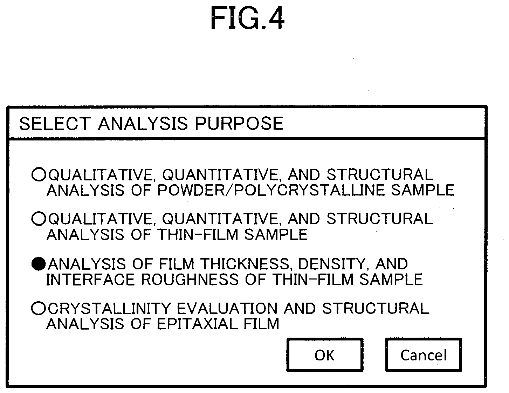

FIG. 4 is a diagram for illustrating the analysis purpose selection screen according to this embodiment. As illustrated in FIG. 4, the X-ray analysis apparatus 1 according to this embodiment is capable of analyses for four (M=4) analysis purposes, and the four analysis purposes are displayed on the analysis purpose selection screen. The user selects an analysis purpose from among the four analysis purposes. In this case, the user uses the mouse to select "analysis of film thickness, density, and interface roughness of thin-film sample" (hereinafter referred to as "first analysis purpose") as an example, and clicks the OK button. The information input portion 13 of the control unit 4 acquires the information input by the user through use of the input device 5 (selected first analysis purpose), and the procedure advances to the subsequent step. When the analysis purpose selection screen does not include the analysis purpose desired by the user, the user clicks the Cancel button. In that case, the first control program 31 is brought to an end.

### [S2: Sample Information Acquisition Step]

The information output portion 14 of the control unit 4 causes the display device 6 to display a sample information input screen. The user inputs, to the X-ray measuring unit 2, the sample information on a sample to be measured for the predetermined analysis purpose, and the sample information acquisition portion 42 of the control unit 4 acquires the sample information on the sample input by the user (from the information input portion 13) (S2: sample information acquisition step). In this case, the measurement for the first analysis purpose is the measurement of the X-ray reflectivity (XRR).

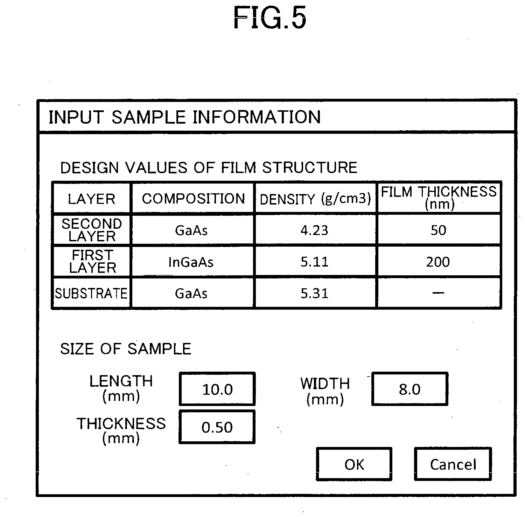

FIG. 5 is a diagram for illustrating the sample information input screen according to this embodiment. The user uses the keyboard to input the sample information on the sample being a target of the analysis purpose, and uses the mouse to click the OK button. When the sample information acquisition portion 42 acquires the sample information on the sample, the procedure advances to the subsequent step. In this case, the sample being the target of the analysis purpose is a thin-film sample, and is formed by stacking a plurality of layers on the surface of a substrate. The sample information on the sample includes design values of the film structure of the thin-film sample and the size (length, width, and thickness) of the sample. The film structure includes: the composition (in this case, GaAs) and the density of the substrate; and the composition, the density, and the film thickness of the respective layers to be stacked (in this case, two thin films formed of a first layer of InGaAs and a second layer of GaAs) . The thin-film sample to be the target of the analysis purpose is rarely a completely unknown sample, and in general, setting values for forming the thin-film sample are known. Therefore, by acquiring those pieces of information as the sample information, it is possible to use the sample information for the determination of a measurement condition and the analysis of a measurement result. When the sample of the user is different from information that can be input on the sample information input screen, the user clicks the Cancel button. In that case, the first control program 31 is brought to an end.

### [S3: Measurement Condition Acquisition Step]

The measurement condition acquisition portion 43 acquires a plurality of measurement conditions that differ from one another based on the acquired sample information (S3: measurement condition acquisition step). In this specification, the measurement conditions are assumed to include a condition for a measuring optical system (hardware) formed of a combination of a plurality of parts and a control condition (for example, scan condition) used when the measuring optical system is used for the measurement.

The storage section 12 further includes the system information storage portion 33, and the system information storage portion 33 stores a plurality of measurement conditions used for the analyses for the plurality of respective analysis purposes (M analysis purposes). Each of the plurality of measurement conditions used for the analyses for the respective analysis purposes can be achieved by the X-ray measuring unit 2. As described above, the measurement conditions include both the measuring optical system and the control condition. In this embodiment, the measuring optical system (optical system) is formed of parts included in the X-ray measuring unit 2, and those parts include slit conditions (incident slit and light-receiving slit) . In this case, the optical system includes a mid-resolution optical system, a high resolution optical system, an ultra-high resolution optical system, and an ultra-high resolution optical system having an analyzer crystal arranged therein. The slit conditions are selected from among a plurality of incident slits and a plurality of pairs of light-receiving slits. One measuring optical system is formed of a combination of a plurality of parts, and hence, when there are a plurality of kinds of the respective parts, a large number of measuring optical systems exist depending on the combination of those kinds of parts. In this case, the measuring optical systems included in the plurality of measurement conditions stored in the system information storage portion 33 are limited to ones that can be achieved by parts possessed by the user. This allows the measuring optical system to be recommended from the measuring optical systems that can be achieved instantaneously by the user with the currently possessed parts, and hence the user can select the measuring optical system from among the measuring optical systems that can be achieved currently. Further, there exist a plurality of control conditions used when measurements are conducted with the respective measuring optical systems, and hence there exist a large number of measurement conditions depending on the combination of the measuring optical systems and the control conditions therefor. For the sake of brevity, in this case, the optical system is assumed to include four kinds, that is, a mid-resolution optical system, a high resolution optical system, an ultra-high resolution optical system, and an ultra-high resolution optical system having an analyzer crystal arranged therein. Further, in this case, the control condition includes only a scan condition.

The measurement condition acquisition portion 43 selects a plurality of measurement conditions (N measurement conditions, where N is a natural number equal to or larger than 2) from among the (plurality of) measurement conditions stored in the system information storage portion 33 based on the sample information on the sample, and acquires the selected plurality of (N) measurement conditions. In this embodiment, three (N=3) measurement conditions are selected, and guidelines therefor are as follows. The optical system is determined based on the value of the layer thickness of the thickest layer of the film structure of the sample. In this case, because the layer thickness of the thickest layer is 200 nm, the high resolution optical system (parallel beam/light-receiving slit) is selected as a recommended optical system, and along with the mid-resolution optical system and the ultra-high resolution optical system listed before and after the high resolution optical system, three optical systems in total are selected. The slit conditions are determined based on the size of the sample. In this case, for each of the three optical systems, the incident slit 25 is set to 0.5 mm, and the two light-receiving slits are each set to 0.2 mm. In addition, the scan condition set for each of the respective optical systems is selected. With the above-mentioned configuration, three measurement conditions are selected and acquired.

### [S4: Virtual Result Acquisition Step]

The virtual result acquisition portion 44 subjects the sample information to a simulation based on each of the plurality of (N) measurement conditions, to thereby acquire a plurality of (N) virtual measurement results of measurements for the predetermined analysis purpose (S4: virtual result acquisition step). In this case, three (N=3) measurement conditions are acquired, and the simulation is executed on the assumption that the sample is subjected to the XRR measurement under each measurement condition by the X-ray measuring unit 2. The virtual measurement results thereof are acquired. In this case, three (N=3) virtual measurement results (XRRs) are acquired.

### [S5: Result Evaluation Step]

The result evaluation portion 45 evaluates the plurality of (N) virtual measurement results (S5: result evaluation step). In this case, the virtual measurement result is an XRR, and the virtual measurement result is evaluated based on, for example, whether or not the critical angle (2θ is small) or the background (BG) region (2θ is large) is covered, whether or not a step size is small enough to observe small oscillations in the XRR, and whether or not a scan speed is appropriate so that the amplitude of small oscillations in the XRR is large enough to be able to be analyzed with respect to noise.

### [S6: Measurement Condition Selection Step]

The measurement condition selection portion 46 selects at least two of the virtual measurement results based on the evaluations of a plurality of virtual measurement results (S6: measurement condition selection step). That is, n (n is a natural number satisfying 2 ≦ n ≦ N) virtual measurement results are selected from among the plurality of (N) virtual measurement results based on the evaluations of the plurality of (N) virtual measurement results executed by the result evaluation portion 45. In this case, all the three (N=3) virtual measurement results acquired by the virtual result acquisition portion 44 are selected (n=N=3). Therefore, the result evaluation step (S5) and the measurement condition selection step (S6) may be omitted, to set the plurality of (N) virtual measurement results acquired in the virtual result acquisition step (S4) as the at least two (n=N) virtual measurement results.

### [S7: Comparison Result Output Step]

The comparison result output portion 47 outputs, as comparison results, at least two (n) virtual measurement results among the plurality of (N) virtual measurement results and at least two (n) of the measurement conditions respectively corresponding to the at least two virtual measurement results (S7: comparison result output step) . In this case, the three measurement conditions include: the three optical systems; and the slit conditions and the scan conditions that are selected respectively corresponding to the three optical systems, while the three virtual measurement results include simulation results of the XRRs obtained when the sample is measured with the three optical systems.

In addition, the information output portion 14 of the control unit 4 causes the display device 6 to display the three virtual measurement results and the three measurement conditions output by the comparison result output portion 47. Specifically, the three virtual measurement results are displayed on a virtual measurement result screen, and the respective measurement conditions are displayed on a measurement condition screen.

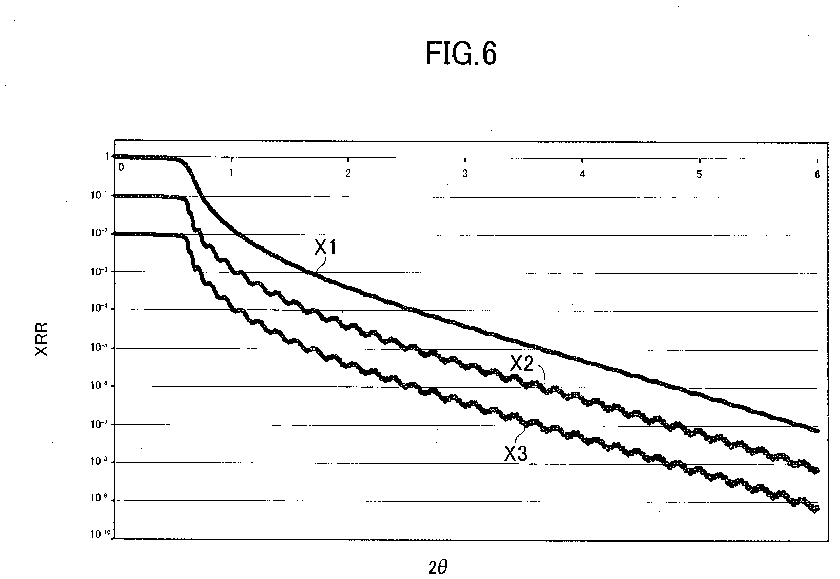

FIG. 6 is a graph for showing the virtual measurement result screen according to this embodiment. Three curved lines X1, X2, and X3 shown in FIG. 6 are arranged by being shifted in a Y-axis direction in order to compare the XRRs of the three optical systems, and the X-axis indicates 2θ. The curved line X1 indicates the mid-resolution optical system, the curved line X2 indicates the high resolution optical system, and the curved line X3 indicates the ultra-high resolution optical system. The respective measurement conditions include not only the optical system but also the slit conditions and the scan conditions corresponding to the optical systems.

As shown in FIG. 6, all the three curved lines are flat in the region exhibiting a small 2θ, and have the XRRs decreasing while oscillating as the 2θ increases. However, the amplitude of the small oscillations observed in the curved line X1 is smaller than the amplitudes of the small oscillations observed in the other two curved lines X2 and X3. Therefore, the user can clearly know from the virtual measurement result screen that the mid-resolution optical system does not have a resolution sufficient to measure the XRR of the sample. Meanwhile, the two curved lines X2 and X3 have almost no difference. Therefore, the user can clearly know from the virtual measurement result screen that it is sufficient to measure the sample through use of the high resolution optical system even without measuring the sample through use of the ultra-high resolution optical system that requires a long measurement time. By viewing the virtual measurement result screen, the user can determine that the recommended optical system is the high resolution optical system.

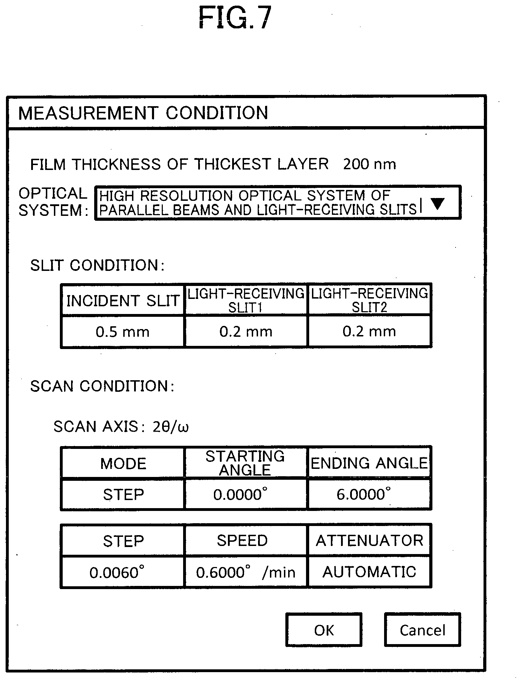

FIG. 7 is a diagram for illustrating the measurement condition screen according to this embodiment. In FIG. 7, a recommended measurement condition is illustrated, and in this case, the measurement condition recommended for the high resolution optical system (optical system of parallel beams and light-receiving slits with high resolution) is illustrated. The slit conditions determined based on the size of the sample and the scan conditions corresponding to the high resolution optical system are displayed together. When the user desires the measurement under the recommended measurement condition, the user clicks the OK button. The information input portion 13 of the control unit 4 acquires information indicating that the user has clicked the OK button, and the storage section 12 of the control unit 4 stores the sample information, the measurement condition, and the virtual measurement result, which brings the first control program 31 to an end. The user is to assemble the recommended measuring optical system, start a known measuring program, and conduct the measurement. When the user does not desire the measurement under the measurement conditions, the user is allowed to change an individual condition on the measurement condition screen. The user may change the measurement condition to a desired measurement condition and click the OK button. When the user cannot change the measurement condition to a desired measurement condition, the user clicks the Cancel button. In that case, it is determined that the user has not determined the measurement conditions, and the first control program 31 is brought to an end.

On the measurement condition screen illustrated in FIG. 7, the recommended measuring optical system (curved line X2 shown in FIG. 6) is illustrated. However, the measurement condition screen of another measurement condition (curved line X1 or X3 shown in FIG. 6) may be displayed on the display device 6 by the control unit 4 when the user clicks the corresponding curved line shown in FIG. 6 with the mouse.

When the user desires none of a plurality of (n) virtual measurement results output in the comparison result output step (S7), the user may be allowed to change at least one condition among the measurement conditions on the measurement condition screen, and to set a new measurement condition. In this case, the simulation conducted when the sample is subjected to the XRR measurement with the X-ray measuring unit 2 under the new measurement condition is executed, and a virtual measurement result under the newmeasurement condition is acquired (similar to the virtual result acquisition step (S4)). Then, the new measurement condition and the virtual measurement result under the new measurement condition are output (similar to the comparison result output step (S7)). When the user still does not desire the virtual measurement result under the new measurement condition, the user may change at least one condition among the measurement conditions on the measurement condition screen again, set a new measurement condition, and repeat those operations until the user obtains the desired virtual measurement result. Further, as a technology relating to the present invention, after the plurality of (N) measurement conditions acquired in the measurement condition acquisition step (S3) are output, the user may select one measurement condition from among the plurality of measurement conditions, and the simulation conducted when the sample is subjected to the XRR measurement with the X-ray measuring unit 2 under the one measurement condition may be executed. Then, a virtual measurement result under the one measurement condition may be acquired and output. When the user does not desire the virtual measurement result under the one measurement condition, the user may change at least one condition among the measurement conditions on the measurement condition screen, set a new measurement condition, then execute the simulation, acquire the virtual measurement result under the new measurement condition, output the virtual measurement result, and repeat those operations. In addition, as another relating condition, the simulation may be executed under the one measurement condition (recommended measurement condition) acquired in the measurement condition acquisition step (S3) or one measurement condition initially set at first by the user himself/herself, and a virtual measurement result under the one measurement condition maybe acquired and output. When the user does not desire the virtual measurement result under the one measurement condition, the user may repeat the setting of the measurement condition and the acquisition of the virtual measurement result until the user obtains the desired virtual measurement result in the same manner.

The present invention has a main feature that virtual result acquisition means acquires a plurality of virtual measurement results through simulations based on a plurality of respective measurement conditions, and comparison result output means outputs, as comparison results, at least two virtual measurement results (and at least two measurement conditions) among the acquired plurality of virtual measurement results (and the plurality of measurement conditions). The comparison results allow the user to determine the recommended measurement condition based on a comparison with another measurement condition, and hence even a user inexperienced in an X-ray analysis apparatus can easily determine a measurement condition for a sample to be analyzed.

In this embodiment, the recommended measurement condition can be determined relatively easily based on the film structure of the sample and the size of the sample. However, in some cases, the recommended measurement condition cannot be determined easily for another analysis purpose or the like. In that case, in the measurement condition acquisition step (S3), the measurement condition acquisition portion 43 may acquire N (N is a relatively large natural number) measurement conditions. In the measurement condition selection step (S6), the measurement condition selection portion 46 may select n (n is a natural number relatively smaller than N; n<N) virtual measurement results based on the evaluations of N virtual measurement results.

### [Measurement Result Analysis]

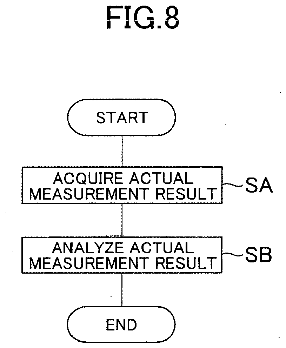

FIG. 8 is a flowchart of the second control program 32 according to this embodiment. The second control program 32 is a program to be executed after a measurement, and is a program for analyzing a measurement result of a sample to be analyzed. As illustrated in FIG. 1, the CPU section 11 of the control unit 4 further includes an actual measurement result acquisition portion 48 and an actual measurement result analysis portion 49.

### [SA: Actual Measurement Result Acquisition Step]

The actual measurement result acquisition portion 48 acquires an actual measurement result of an actual measurement conducted for the sample with the X-ray measuring unit 2 based on one measurement condition selected from among at least two measurement conditions (SA: actual measurement result acquisition step) . The actual measurement result acquisition portion 48 may acquire the actual measurement result from the X-ray measuring unit 2, or may acquire the actual measurement result from the storage section 12 in which the actual measurement result is stored by the measuring program. Further, the actual measurement result acquisition portion 48 acquires the sample information, the measurement condition, and the virtual measurement result that are stored in the storage section 12.

### [SB: Actual Measurement Result Analysis Step]

The actual measurement result analysis portion 49 analyzes the actual measurement result based on the sample information and one measurement condition (SB: actual measurement result analysis step) . It is examined whether or not there is no problem in the actual measurement result, for example, whether or not the amplitude of the small oscillations observed in the actual measurement result (actual measurement data) of the sample has no problem (is sufficiently large) compared with the amplitude of the corresponding oscillations observed in the virtual measurement result (or logical data) . In that case, it is also examined, for example, whether or not a critical angle (2θ is small) or a background (BG) region (2θ is large) is covered, or whether or not the step size is appropriate.

After it is determined that there is no problem in the actual measurement result, the analysis of the actual measurement result is conducted. The analysis can be executed more easily and speedily through use of the sample information and the virtual measurement result during the analysis. Then, it is determined whether or not an R value (index of suitability of the actual measurement result with respect to the logical data) of an analysis result is sufficiently small. For example, when the R value is equal to or smaller than 5%, it is determined that the analysis result has been executed correctly.

When an abnormality is found in the analysis result, the analysis is conducted again. For example, when undulations or an oscillating structure is observed in a residual pattern, the existence of another layer in the film structure of the sample is suggested. In this case, the residual pattern represents a pattern obtained by subtracting the XRR calculated from the analysis result from the XRR of the actual measurement result. Even when neither the undulations nor the oscillating structure is observed in the residual pattern, it is conceivable that the surface layer may be oxidized and that a new layer has been generated in an interface. In those cases, the analysis may be conducted again by adding a new layer to the film structure of the sample. It is also conceivable that the designed film structure and the actually generated film structure differ from each other. In that case, the analysis may be conducted again by modifying a model of the film structure to an expected model.

An analysis result determination screen may be generated by setting respective contents described above as check items, and the information output portion 14 of the control unit 4 may display the analysis result determination screen on a display unit. The user confirms whether or not there is no problem in a plurality of check items displayed on the analysis result determination screen, and when there is no problem, clicks the OK button to bring the second control program 32 to an end. When there is a problem in the check items, the analysis is conducted again.

The operation guide method for the X-ray analysis apparatus 1 (or operation guide system 3) according to this embodiment is described above . The above description is made by taking an example of selecting the first analysis purpose (analysis of, for example, the film thickness of the thin-film sample) as the analysis purpose, but the same applies to the case where another analysis purpose is selected. As another example, a description is made of a case where, in the analysis purpose acquisition step (S1), the user selects "qualitative, quantitative, and structural analysis of powder/polycrystalline sample" (hereinafter referred to as "second analysis purpose") on the analysis purpose selection screen illustrated in FIG. 4.

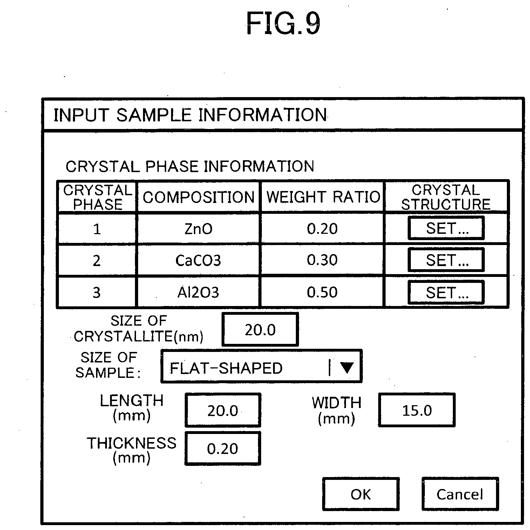

FIG. 9 is a diagram for illustrating the sample information input screen according to another example of this embodiment, and is a screen to be displayed in the sample information acquisition step (S2). The sample information on the sample being a target of the second analysis purpose includes information on each of a plurality of expected crystal phases, the size of a crystallite, and the shape and size of the sample. The compositions of the respective crystal phases and an expected weight ratio are input, and "set" button is clicked to input details of a crystal structure thereof. In this manner, the sample information to be input differs depending on the analysis purpose, and hence the sample information input screen suitable for the analysis purpose is generated.

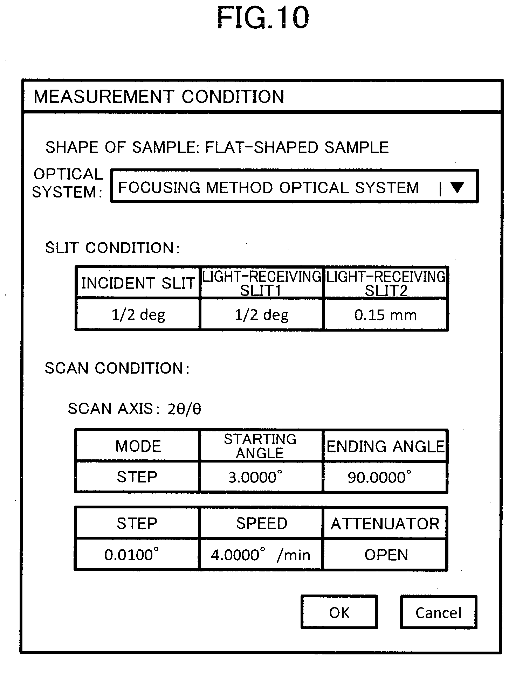

As described above, the operation guide method is executed by the first control program 31, and the recommended measurement condition is selected. FIG. 10 is a diagram for illustrating a measurement condition screen according to another example of this embodiment, and is a display screen for the measurement condition output in the comparison result output step (S7). In FIG. 10, a recommended measurement condition is illustrated, and in the same manner as in the case of the first analysis purpose, the measurement condition includes the measuring optical system and the control condition therefor, and the measuring optical system includes the optical system and the slit conditions.

The X-ray analysis apparatus, the operation guide system therefor, the operation guide method therefor, and the operation guide program therefor according to the embodiment of the present invention have been described above. The present invention is not limited to the above-mentioned embodiment, and can be widely applied. It should be understood that the analysis purpose of the X-ray analysis apparatus is not limited to the above-mentioned four analysis purposes. Further, the measuring optical systems included in the measurement conditions stored in the system information storage portion 33 are limited to ones that can be achieved by parts possessed by the user. However, for example, the stored measuring optical systems may include one that can be achieved by parts that are not possessed by the user, and when the user does not possess a part included in the recommended measuring optical system, the virtual measurement results of both the recommended measuring optical system and the measuring optical system that can be achieved by the parts possessed by the user can be output as the comparison results, to thereby, for example, inform the user of an advantage of the recommended measuring optical system and propose the purchase of the part that is not possessed. Further, in the above-mentioned embodiment, the first control program 31, the second control program 32, and the known measuring program are programs independent of one another, but may be executed as one program.

## Claims

1. An operation guide system (3) for an X-ray analysis, comprising:
sample information acquisition means (42) for acquiring sample information on a sample to be measured for a predetermined analysis purpose with an X-ray measuring unit (2);
measurement condition acquisition means (43) for acquiring a plurality of measurement conditions different from one another, each of the plurality of measurement conditions consisting of (i) a condition specific for a measuring optical system formed of a combination of a plurality of parts and (ii) a control condition used when said measuring optical system is used for the measurement;
virtual result acquisition means (44) for subjecting the sample information to simulations respectively based on the plurality of measurement conditions, to thereby acquire a plurality of virtual measurement results of measurements for the predetermined analysis purpose; and
comparison result output means (47) for outputting, as comparison results, at least two virtual measurement results among the plurality of virtual measurement results and at least two of the plurality of measurement conditions respectively corresponding to the at least two virtual measurement results.

2. The operation guide system (3) for an X-ray analysis according to claim 1, further comprising:
result evaluation means (45) for conducting evaluations of the plurality of virtual measurement results; and
measurement condition selection means (46) for selecting the at least two virtual measurement results based on the evaluations of the plurality of virtual measurement results.

3. The operation guide system (3) for an X-ray analysis according to claim 1 or 2, further comprising system information storage means (33) for storing the plurality of measurement conditions,
wherein the plurality of measurement conditions stored in the system information storage means are achievable with the X-ray measuring unit (2).

4. The operation guide system (3) for an X-ray analysis according to any one of claims 1 to 3, further comprising:
actual measurement result acquisition means (48) for acquiring an actual measurement result of an actual measurement conducted for the sample with the X-ray measuring unit (2) based on one measurement condition selected from among the at least two of the plurality of measurement conditions; and
actual measurement result analysis means (49) for analyzing the actual measurement result based on the sample information and the one measurement condition.

5. An operation guide method for an X-ray analysis, the operation guide method comprising:
acquiring sample information on a sample to be measured for a predetermined analysis purpose;
acquiring a plurality of measurement conditions different from one another, each of the plurality of measurement conditions consisting of (i) a condition specific for a measuring optical system formed of a combination of a plurality of parts and (ii) a control condition used when said measuring optical system is used for the measurement;
subjecting the sample information to simulations respectively based on the plurality of measurement conditions, to thereby acquire a plurality of virtual measurement results of measurements for the predetermined analysis purpose; and
outputting, as comparison results, at least two virtual measurement results among the plurality of virtual measurement results and at least two of the plurality of measurement conditions respectively corresponding to the at least two virtual measurement results.

6. An operation guide program product (31) for an X-ray analysis, for causing a computer to function as:
sample information acquisition means for acquiring sample information on a sample to be measured for a predetermined analysis purpose;
measurement condition acquisition means for acquiring a plurality of measurement conditions different from one another, each of the plurality of measurement conditions consisting of (i) a condition specific for a measuring optical system formed of a combination of a plurality of parts and (ii) a control condition used when said measuring optical system is used for the measurement;
virtual result acquisition means for subjecting the sample information to simulations respectively based on the plurality of measurement conditions, to thereby acquire a plurality of virtual measurement results of measurements for the predetermined analysis purpose; and
comparison result output means for outputting, as comparison results, at least two virtual measurement results among the plurality of virtual measurement results and at least two of the plurality of measurement conditions respectively corresponding to the at least two virtual measurement results.

## Patentansprüche

1. Betriebsführungssystem (3) für eine Röntgenanalyse, umfassend:
Probeninformationserfassungsmittel (42) zum Erfassen von Probeninformationen über eine zu messende Probe für einen vorbestimmten Analysezweck mit einer Röntgenmesseinheit (2);
Messbedingungserfassungsmittel (43) zum Erfassen einer Mehrzahl von Messbedingungen, die sich voneinander unterscheiden, wobei jede der Mehrzahl von Messbedingungen aus (i) einer Bedingung, die für ein optisches Messsystem spezifisch ist, das aus einer Kombination einer Mehrzahl von Teilen besteht, und (ii) einer Kontrollbedingung besteht, die verwendet wird, wenn das optische Messsystem für die Messung verwendet wird;
Virtuelles-Ergebnis-Erfassungsmittel (44) zum Unterziehen der Probeninformationen Simulationen jeweils basierend auf der Mehrzahl von Messbedingungen, um dadurch eine Mehrzahl virtueller Messergebnisse von Messungen für den vorbestimmten Analysezweck zu erfassen; und
Vergleichsergebnisausgabemittel (47) zum Ausgeben, als Vergleichsergebnisse, von zumindest zwei virtuellen Messergebnissen unter der Mehrzahl virtueller Messergebnisse und zumindest zwei der Mehrzahl von Messbedingungen, die jeweils den zumindest zwei virtuellen Messergebnissen entsprechen.

2. Betriebsführungssystem (3) für eine Röntgenanalyse nach Anspruch 1, ferner umfassend:
Ergebnisbewertungsmittel (45) zum Durchführen von Bewertungen der Mehrzahl virtueller Messergebnisse; und
Messbedingungenauswahlmittel (46) zum Auswählen der zumindest zwei virtuellen Messergebnisse basierend auf den Bewertungen der Mehrzahl virtueller Messergebnisse.

3. Betriebsführungssystem (3) für eine Röntgenanalyse nach Anspruch 1 oder 2, ferner umfassend Systeminformationsspeichermittel (33) zum Speichern der Mehrzahl von Messbedingungen,
wobei die Mehrzahl von Messbedingungen, die in dem Systeminformationsspeichermittel gespeichert sind, mit der Röntgenmesseinheit (2) erreichbar sind.

4. Betriebsführungssystem (3) für eine Röntgenanalyse nach einem der Ansprüche 1 bis 3, ferner umfassend:
Tatsächliches-Messergebnis-Erfassungsmittel (48) zum Erfassen eines tatsächlichen Messergebnisses einer tatsächlichen Messung, die für die Probe mit der Röntgenmesseinheit (2) durchgeführt wird, basierend auf einer Messbedingung, die aus zumindest zwei der Mehrzahl von Messbedingungen ausgewählt wird; und
Tatsächliches-Messergebnis-Analysemittel (49) zum Analysieren des tatsächlichen Messergebnisses basierend auf den Probeninformationen und der einen Messbedingung.

5. Betriebsführungsverfahren für eine Röntgenanalyse, wobei das Betriebsführungsverfahren umfasst:
Erfassen von Probeninformationen über eine zu messende Probe für einen vorbestimmten Analysezweck;
Erfassen einer Mehrzahl von Messbedingungen, die sich voneinander unterscheiden, wobei jede der Mehrzahl von Messbedingungen aus (i) einer Bedingung, die für ein optisches Messsystem spezifisch ist, das aus einer Kombination einer Mehrzahl von Teilen besteht, und (ii) einer Kontrollbedingung besteht, die verwendet wird, wenn das optische Messsystem für die Messung verwendet wird;
Unterziehen der Probeninformationen Simulationen jeweils basierend auf der Mehrzahl von Messbedingungen, um dadurch eine Mehrzahl virtueller Messergebnisse von Messungen für den vorbestimmten Analysezweck zu erfassen; und
Ausgeben, als Vergleichsergebnisse, von zumindest zwei virtuellen Messergebnissen unter der Mehrzahl virtueller Messergebnisse und zumindest zwei der Mehrzahl von Messbedingungen, die jeweils den zumindest zwei virtuellen Messergebnissen entsprechen.

6. Betriebsführungsprogrammprodukt (31) für eine Röntgenanalyse, um einen Computer zu veranlassen, zu fungieren als:
Probeninformationserfassungsmittel zum Erfassen von Probeninformationen über eine zu messende Probe für einen vorbestimmten Analysezweck;
Messbedingungserfassungsmittel zum Erfassen einer Mehrzahl von Messbedingungen, die sich voneinander unterscheiden, wobei jede der Mehrzahl von Messbedingungen aus (i) einer Bedingung, die für ein optisches Messsystem spezifisch ist, das aus einer Kombination einer Mehrzahl von Teilen besteht, und (ii) einer Kontrollbedingung besteht, die verwendet wird, wenn das optische Messsystem für die Messung verwendet wird;
Virtuelles-Ergebnis-Erfassungsmittel zum Unterziehen der Probeninformationen Simulationen jeweils basierend auf der Mehrzahl von Messbedingungen, um dadurch eine Mehrzahl virtueller Messergebnisse von Messungen für den vorbestimmten Analysezweck zu erfassen; und
Vergleichsergebnisausgabemittel zum Ausgeben, als Vergleichsergebnisse, von zumindest zwei virtuellen Messergebnissen unter der Mehrzahl virtueller Messergebnisse und zumindest zwei der Mehrzahl von Messbedingungen, die jeweils den zumindest zwei virtuellen Messergebnissen entsprechen.

## Revendications

1. Système de guidage d'opération (3) pour une analyse aux rayons X, comprenant :
un moyen d'acquisition d'informations d'échantillon (42) pour acquérir des informations d'échantillon sur un échantillon devant être mesuré pour un objectif d'analyse prédéterminé avec un module de mesure aux rayons X (2) ;
un moyen d'acquisition de conditions de mesure (43) pour acquérir une pluralité de conditions de mesure différentes l'une de l'autre, chacune de la pluralité de conditions de mesure étant constituée de (i) une condition spécifique pour un système optique de mesure formé d'une combinaison d'une pluralité de pièces et (ii) une condition de commande utilisée lorsque ledit système optique de mesure est utilisé pour la mesure ;
un moyen d'acquisition de résultats virtuels (44) pour soumettre les informations d'échantillon à des simulations basées respectivement sur la pluralité de conditions de mesure, pour acquérir de ce fait une pluralité de résultats de mesure virtuels de mesures pour l'objectif d'analyse prédéterminé ; et
un moyen d'émission de résultats de comparaison (47) pour émettre, en tant que résultats de comparaison, au moins deux résultats de mesure virtuels parmi la pluralité de résultats de mesure virtuels et au moins deux de la pluralité de conditions de mesure correspondant respectivement aux au moins deux résultats de mesure virtuels.

2. Système de guidage d'opération (3) pour une analyse aux rayons X selon la revendication 1, comprenant en outre :
un moyen d'évaluation de résultats (45) pour mener des évaluations de la pluralité de résultats de mesure virtuels ; et
un moyen de sélection de conditions de mesure (46) pour sélectionner les au moins deux résultats de mesure virtuels en fonction des évaluations de la pluralité de résultats de mesure virtuels.

3. Système de guidage d'opération (3) pour une analyse aux rayons X selon la revendication 1 ou 2, comprenant en outre un moyen de stockage d'informations système (33) pour stocker la pluralité de conditions de mesure,
dans lequel la pluralité de conditions de mesure stockées dans le moyen de stockage d'informations système peuvent être atteintes avec le module de mesure aux rayons X (2).

4. Système de guidage d'opération (3) pour une analyse aux rayons X selon l'une quelconque des revendications 1 à 3, comprenant en outre :
un moyen d'acquisition de résultats de mesure réelle (48) pour acquérir un résultat de mesure réelle d'une mesure réelle menée pour l'échantillon avec le module de mesure aux rayons X (2) en fonction d'une condition de mesure sélectionnée parmi les au moins deux de la pluralité de conditions de mesure ; et
un moyen d'analyse de résultats de mesure réelle (49) pour analyser le résultat de mesure réelle en fonction des informations d'échantillon et de la condition de mesure en question.

5. Procédé de guidage d'opération pour une analyse aux rayons X, le procédé de guidage d'opération comprenant :
acquérir des informations d'échantillon sur un échantillon devant être mesuré pour un objectif d'analyse prédéterminé ;
acquérir une pluralité de conditions de mesure différentes l'une de l'autre, chacune de la pluralité de conditions de mesure étant constituée de (i) une condition spécifique pour un système optique de mesure formé d'une combinaison d'une pluralité de pièces et (ii) une condition de commande utilisée lorsque ledit système optique de mesure est utilisé pour la mesure ;
soumettre les informations d'échantillon à des simulations basées respectivement sur la pluralité de conditions de mesure, pour acquérir de ce fait une pluralité de résultats de mesure virtuels de mesures pour l'objectif d'analyse prédéterminé ; et
émettre, en tant que résultats de comparaison, au moins deux résultats de mesure virtuels parmi la pluralité de résultats de mesure virtuels et au moins deux de la pluralité de conditions de mesure correspondant respectivement aux au moins deux résultats de mesure virtuels.

6. Produit de programme de guidage d'opération (31) pour une analyse aux rayons X, pour amener un ordinateur à fonctionner en tant que :
moyen d'acquisition d'informations d'échantillon pour acquérir des informations d'échantillon sur un échantillon devant être mesuré pour un objectif d'analyse prédéterminé ;
moyen d'acquisition de conditions de mesure pour acquérir une pluralité de conditions de mesure différentes l'une de l'autre, chacune de la pluralité de conditions de mesure étant constituée de (i) une condition spécifique pour un système optique de mesure formé d'une combinaison d'une pluralité de pièces et (ii) une condition de commande utilisée lorsque ledit système optique de mesure est utilisé pour la mesure ;
moyen d'acquisition de résultats virtuels pour soumettre les informations d'échantillon à des simulations basées respectivement sur la pluralité de conditions de mesure, pour acquérir de ce fait une pluralité de résultats de mesure virtuels de mesures pour l'objectif d'analyse prédéterminé ; et
moyen d'émission de résultats de comparaison pour émettre, en tant que résultats de comparaison, au moins deux résultats de mesure virtuels parmi la pluralité de résultats de mesure virtuels et au moins deux de la pluralité de conditions de mesure correspondant respectivement aux au moins deux résultats de mesure virtuels.
